# EUROPÄISCHE PATENTSCHRIFT

(11) **EP 1 953 405 B1**
(45) Veröffentlichungstag und Bekanntmachung des Hinweises auf die Patenterteilung: **13.06.2012**
(21) Anmeldenummer: 07002438.5
(22) Anmeldetag: 05.02.2007
(51) Int. Cl.: F16D 48/04, F16D 25/08

(54) **Motorrad-Kupplung**
Motorcycle clutch
Embrayage de moto

(43) Veröffentlichungstag der Anmeldung: 06.08.2008
(73) Patentinhaber: Hoerbiger Antriebstechnik GmbH, 86956 Schongau (DE)
(72) Erfinder: Sayhoun, Ahmed, 82363 Weilheim (DE); Nickel, Falk, 86925 Fuchstal (DE); Ruprecht, Georg, 87640 Biessenhofen (DE)
(74) Vertreter: Kitzhofer, Thomas

(56) Entgegenhaltungen:
- EP-A1- 0 098 749
- EP-A2- 0 780 591
- GB-A- 981 913
- GB-A- 2 247 292

## Beschreibung

Die Erfindung betrifft eine Motorrad-Kupplung für eine Antriebsverbindung zwischen einem Motor und einem Schaltgetriebe eines Motorrades gemäß dem Oberbegriff des Anspruches 1.

Eine derartige Kupplung ist aus der EP 0 780 591 B1 bekannt. In dieser Druckschrift werden zunächst die Probleme beschrieben, die bei Motorrädern, insbesondere höherer Leistung, im Teillastbereich und im Schubbetrieb auftreten können, da mit abnehmendem Motordrehmoment die Schaltkupplung zunehmend eine starre Antriebsverbindung zwischen Motor und angetriebenem Hinterrad mit der Folge darstellt, dass das Hinterrad zum Ausbrechen und Springen neigt.

Ferner wird beschrieben, dass zur Herabsetzung der Schaltkräfte einer Schaltkupplung für ein Motorrad die EP 0 098 749 A1 lehrt, eine die Schaltkupplung einrückende Kupplungsfeder nur für einen Teil des größten übertragbaren Drehmomentes auszulegen und die restliche Kupplungskraft hydraulisch aufzubringen. Als nachteilig für die Funktion der Schleppmomentsteuerung, auf welche die EP 0 780 591 B1 abzielt, wird bei dieser bekannten Schaltkupplung angesehen, dass das kleinste übertragbare Drehmoment durch die Kupplungsfeder bestimmt wird, die zum Antreiben der Kurbelwelle über das Hinterrad ausreichend dimensioniert werden muss. Ferner wird erläutert, dass bei dieser bekannten Kupplung keine feinfühlige Steuerung des Beaufschlagungsdruckes der Schaltkupplung möglich ist, weil mit der Betätigung des Schaltventils der Hydraulikdruck im Wesentlichen abgebaut wird.

Zur Lösung der Aufgabe, eine Schaltkupplung für ein Motorrad so auszugestalten, dass die Drehmomentübertragung zwischen Motor und angetriebenem Hinterrad in einem vorgebbaren Bereich unabhängig von der Schließkraft der Kupplungsfeder einen vorteilhaften Ausgleich allfälliger antriebsseitiger Unregelmäßigkeiten im Schiebebetrieb ermöglicht wird, lehrt die EP 0 780 591 B1 das Vorsehen einer Steuereinrichtung, mit der es möglich sein soll, dass der Druckkörper der Kupplung in Abhängigkeit von der Motorbelastung mit einer zur Schließkraft der Kupplungsfeder gegensinnigen Kraft beaufschlagbar ist.

Nachteilig bei dieser Ausgestaltung einer Motorrad-Kupplung ist jedoch, dass das Problem der hohen Betätigungskräfte des Kupplungshebels von Motorrad-Kupplungen konstruktiv durch die Begrenzung des Bauraums nicht gelöst werden kann, was insbesondere bei Motorrädern mit hoher Motordrehmoment auftritt, da zur Übertragung des Motordrehmomentes insbesondere bei Motorrädern mit großem Hubraum sehr hohe Kupplungsfederkräfte aufgebracht werden müssen, die beim Ausrücken der Kupplung manuell überwunden werden müssen, was wiederum zu hohen Betätigungskräften führt.

Es ist daher Aufgabe der vorliegenden Erfindung, eine Motorrad-Kupplung der im Oberbegriff des Anspruches 1 angegebenen Art zu schaffen, die eine erhebliche Herabsetzung der Betätigungskräfte für den manuell betätigbaren Kupplungshebel der Kupplung ermöglicht.

Die Lösung dieser Aufgabe erfolgt durch die Merkmale des Anspruchs 1.

Im Gegensatz zur Lehre der EP 0 780 591 B1 sieht die vorliegende Erfindung eine Motorrad-Kupplung vor, die mit einer Servoeinrichtung versehen ist, die es möglich macht, sowohl beim Anfahren als auch bei jedwedem Schaltvorgang die Betätigungskraft des Kupplungshebels auf ein wählbares für den Fahrer optimales Maß zu reduzieren. Denn im Rahmen der Erfindung durchgeführte Untersuchungen haben ergeben, dass bei Fokussierung auf die Probleme, die gemäß der EP 0 780 591 B1 bei negativen Motordrehmomenten auftreten könnten, das für die Praxis wesentlich schwerwiegendere Problem ungelöst bleibt, dass die Betätigungskraft des Kupplungshebels nicht so reduzierbar ist, dass dauerhaft eine Betätigung der Kupplung entsprechend heutigen Komfort- und Sicherheitsansprüchen möglich ist. Es ist daher in Abkehr von der Lehre der EP 0 780 591 B1 erfindungsgemäß eine Servoeinrichtung vorgesehen, die durch die Ausnutzung des Ansaugdrucks im Ansaugtrakt des Motors bei jedem Schaltvorgang (also sowohl beim Anfahren wie auch bei allen anderen Schaltvorgängen) eine Kraft aufbaut, die der Kraft der Kupplungsfederanordnung entgegenwirkt, so dass bei allen Betriebszuständen eine Reduzierung der Betätigungskraft des Kupplungshebels möglich gemacht wird.

Die Unteransprüche haben vorteilhafte Weiterbildungen der Erfindung zum Inhalt.

Insbesondere ist es möglich, die Servoeinrichtung mit einer Anordnung von zumindest zwei oder auch mehr Membranen zu versehen, die entweder in Reihe geschaltet werden können oder die auch in entgegengesetzter Wirkrichtung angeordnet werden können, wobei dann z.B. mechanisch oder hydraulisch durch eine Umlenkeinrichtung die Gleichrichtung der Membrankräfte erreichbar wird, die zu einer Gegenkraft addiert werden können, die die Betätigungskraft im Sinne der vorliegenden Erfindung in allen Betriebszuständen wirksam reduziert.

Durch Erfüllung von diesem Hauptaspekt der vorliegenden Erfindung wird in Verbindung mit dem ansteigenden Unterdruck im Schiebebetrieb ein sehr großes Entkoppeln des Antriebsstrangs erreicht, was gegebenenfalls vorteilhaft zur vollständigen Unterbinden des Einflusses des negativen Drehmoments auf das Fahrverhalten genutzt werden kann. Soll das negative Motordrehmoment genutzt werden können, z.B. bei Bergabfahrten, ist gemäß einer besonders bevorzugten Ausführungsform eine Unterdruckbegrenzungseinrichtung vorgesehen, die zwischen der Unterdruckquelle (dem Ansaugrohr des Motors) und der Kupplung vorgesehen ist und durch die das übertragbare negative Antriebsmoment in vorteilhafter Weise für das Fahrverhalten in einem sehr großen Bereich bestimmbar ist.

Wenn im Schiebebetrieb des Motorrades der Unterdruck im Ansaugbereich des Motors stark ansteigt, wirkt bei dieser Ausführungsform ein federvorgespannter Membrankolben gegen die Atmosphäre, so dass der Membrankolben eine Schaltstelle zwischen dem Motor und der Kupplung schließt. Dies hat zur Folge, dass ein maximaler Unterdruck hinter dieser Schaltstelle in Richtung zur Kupplung begrenzt bzw. festgelegt wird, so dass die Übertragung eines Motorschleppmomentes möglich ist, da die Kupplung zwar etwas gelöst wird, jedoch nicht vollständig öffnet. Dies macht es möglich, auch mit der erfindungsgemäßen Kupplung eine Motorbremswirkung ohne die Gefahr des Hinterradausbrechens zu erreichen.

Wenn der Unterdruck beim erneuten Gasgeben abnimmt, wird die Schaltstelle geöffnet, so dass die Verbindung zur Servoeinrichtung wieder frei ist.

Erfindungsgemäß ist es hierbei möglich, den zuvor erwähnten Membrankolben als ein passives Teil vorzusehen, oder anstelle des Membrankolbens auch ein aktiv gesteuertes Schaltelement, z.B. ein elektronisches Schaltelement, vorzusehen, das in Abhängigkeit von wählbaren Motorparametern angesteuert werden kann.

Desweiteren ist es bei dieser besonders bevorzugten Ausführungsform möglich, hinter der Schaltstelle in Richtung zur Kupplung einen zusätzlichen zuschaltbaren Unterdruckspeicher vorzusehen, der es möglich macht, beispielsweise bei abgeschaltetem Motor, Unterdruck der Kupplung zur Verfügung zu stellen, so dass auch in diesem Zustand eine Servowirkung zur Reduktion der Handbetätigungskraft des Kupplungshebels denkbar ist, z.B. zum Rangieren. Dazu wird der Druckspeicher zum Beispiel über ein Rückschlagventil im Fahrbetrieb aufgeladen, um dann im Rangierbetrieb durch Zuschalten auf den Servozylinder bei gleichzeitigem Verschließen der Schaltstelle zum Motor die gewünschte Handkraftreduzierung zu ermöglichen.

Weitere Einzelheiten, Vorteile und Merkmale der vorliegenden Erfindung ergeben sich aus nachfolgender Beschreibung von Ausführungsbeispielen anhand der beigefügten Zeichnung. Darin zeigt:
Fig. 1 eine geschnittene Darstellung der erfindungsgemäßen Kupplung in einem schematisch vereinfacht dargestellten Blockdiagramm, und
Fig. 2 eine Schnittdarstellung einer Membrananordnung der Servoeinrichtung der erfindungsgemäßen Kupplung.

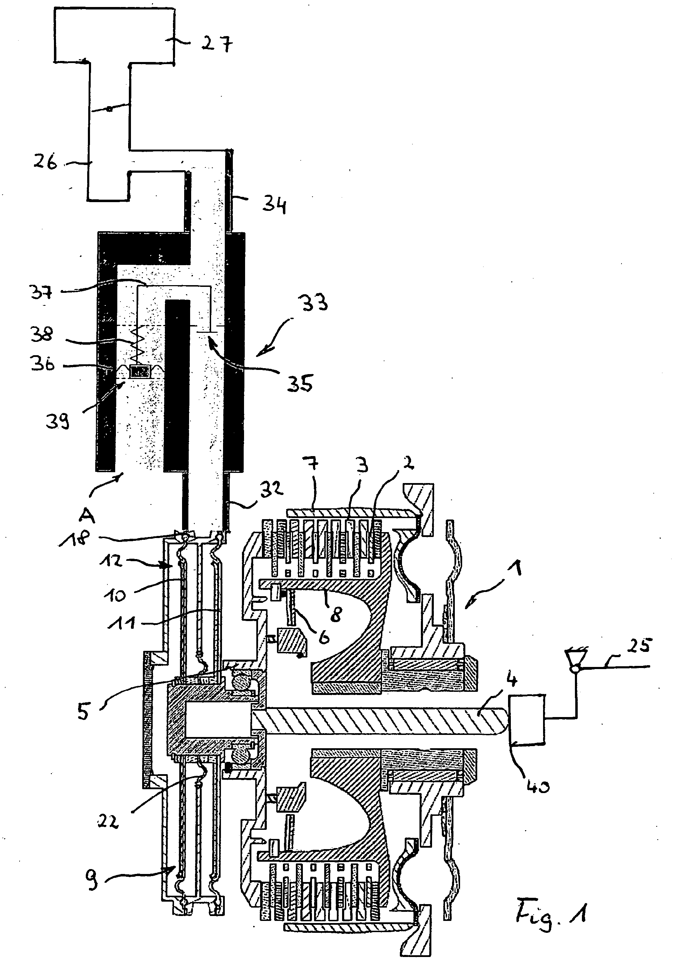

In Fig. 1 ist zunächst eine erfindungsgemäße Kupplung 1 dargestellt, die als Lamellenkupplung ausgebildet ist und dementsprechend ineinandergreifende Innen- und Außenlamellen 2 bzw. 3 aufweist. Die Außenlamellen 3 sind in einem Korb 7 und die Innenlamellen 2 sind auf einer Nabe 8 angeordnet, wie dies im Einzelnen auch aus der Schnittdarstellung der Fig. 1 hervorgeht, in der das äußere Kupplungsgehäuse nicht gezeigt ist.

Ferner weist die Kupplung 1 eine Ausrückeinrichtung 4 für einen Druckkörper 5 auf. Der Druckkörper 5 ist durch zumindest eine Kupplungsfederanordnung 6 in Schließ- bzw. Einrückrichtung der Kupplung 1 federbelastet.

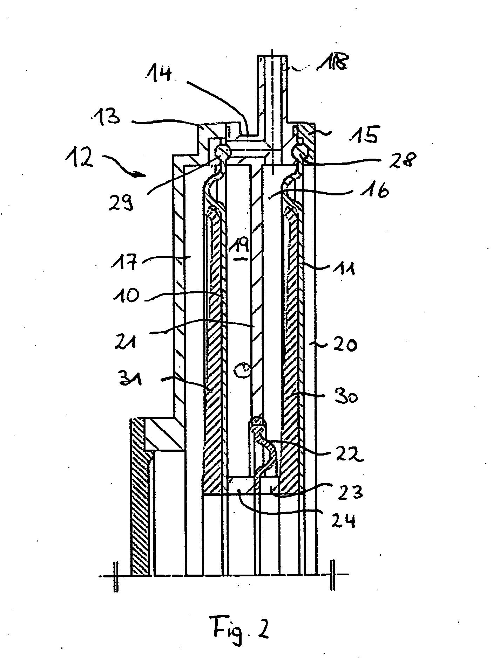

Wie sich aus einer Zusammenschau der Fig. 1 und 2 ergibt, weist die erfindungsgemäße Kupplung 1 ferner eine Servoeinrichtung 9 auf. Die Servoeinrichtung 9 dient zur Reduktion der Betätigungskraft des in Fig. 1 schematisch vereinfacht dargestellten Kupplungshebels 25 eines in den Figuren nicht näher dargestellten Motorrades. Die Servoeinrichtung 9 ist zu diesem Zweck mit dem Ansaugtrakt 26 eines in Fig. 1 nur schematisch angedeuteten Motors 27 des Motorrades verbunden, so dass die Servoeinrichtung 9 unter Ausnutzung des im Ansaugtrakt 26 vorliegenden Ansaugunterdruckes eine Servokraft aufbauen kann, die der Richtung der Federkraft der Federanordnung 6 stets entgegenwirkt, was die Betätigungskraft für den Kupplungshebel 25 reduziert, da zum Ausrücken der Kupplung 1, also zum Trennen der Innen- und Außenlamellen 2 bzw. 3 der Kupplungshebel 25 entgegen der auf die Lamellen 2 und 3 wirkenden Federkraft angezogen werden muss.

Bei der in den Fig. 1 und 2 dargestellten, besonders bevorzugten Ausführungsform weist die Servoeinrichtung 9 eine Membrananordnung auf, die im Beispielsfalle zwei in einem Gehäuse 12 in Reihe angeordnete Membranen 10 und 11 umfasst, Das Gehäuse 12 ist mit einem Außenteil 13, einem Mittelteil 14 und einem Innenteil 15 versehen, was sich insbesondere aus der Teilschnittansicht der Fig. 2 ergibt. Die Teile 13, 14 und 15 sind fest miteinander verbunden und begrenzen Unterdruckräume 16 und 17, die durch die Membranen 10 bzw. 11 von Atmosphärendruckräumen 19 und 20 getrennt sind. Hierfür sind die Membranen 10 bzw. 11 an ihren umfangsseitigen äußeren Bereichen über Dichteinrichtungen 28 bzw. 29 im Gehäuse 12 eingespannt. Eine gemäß der in Fig. 2 gewählten Darstellung untere Membranabdichtung 22 ist dazu vorgesehen, das Gehäuse in Richtung auf die Kupplungswelle abzudichten, wozu die Membrandichtung 22 an einer Zwischenwand 21 befestigt und zwischen Distanzhülsen 23 und 24 fixiert ist, die sich an Wandabschnitten 30 bzw. 31 des Gehäuses 12 abstützen.

Wie sich aus einer Zusammenschau der Fig. 1 und 2 ferner ergibt, sind die Unterdruckkammern 16 und 17 über einen Unterdruckanschluss 18 und eine Unterdruckleitung 32 an den Ansaugtrakt 26 des Motors 27 angeschlossen.

Wie Fig. 1 verdeutlicht, ist zwischen dem Ansaugtrakt 26 und dem Unterdruckanschluss 18 eine schematisch vereinfacht dargestellte Unterdruckbegrenzungseinrichtung 33 zwischengeschaltet. Diese Unterdruckbegrenzungseinrichtung 33 ist über einen Leitungsabschnitt 34 mit dem Ansaugtrakt 26 verbunden, der in die Unterdruckleitung 32 übergeht, so wie sich dies im Einzelnen aus Fig. 1 ergibt.

Im Leitungsabschnitt 34 ist innerhalb der Unterdruckbegrenzungseinrichtung 33 eine Schaltstelle 35, beispielsweise in Form eines Ventils vorgesehen, die mit einem Betätigungsteil, im Beispielsfalle einem Membrankolben 36, über eine Verbindungseinrichtung 37 verbunden ist. Der Membrankolben 36 ist mittels einer Feder 38 gegen einen Festanschlag 39 vorgespannt, so dass beim Auftreten eines Unterdrucks im Ansaugtrakt 26 im Schiebebetrieb, bei dem dieser Unterdruck stark ansteigt, der federbelastete Membrankolben die Schaltstelle 35 schließt, da der Membrankolben gegen die Atmosphäre A wirkt. Dadurch wird im Bereich hinter der Schaltstelle 35, also in Richtung auf den Unterdruckanschluss 18, der Unterdruck in seinem maximalen Wert begrenzt bzw. fixiert, so dass die Übertragung eines Motorschleppmomentes möglich ist, da sich die Kupplung 1 nur teilweise, aber nicht vollständig öffnet. Dies macht es möglich, die Motorbremswirkung auszunutzen.

Fällt der Unterdruck beim Gasgeben jedoch wieder ab, wird die Schaltstelle 35 geöffnet, so dass die Verbindung zur Servoeinrichtung 9 wieder hergestellt wird.

Zur Ergänzung der voranstehenden schriftlichen Offenbarung wird hiermit explizit auf die zeichnerische Darstellung der Erfindung in den Fig. 1 und 2 verwiesen, da sonstige Teile der erfindungsgemäßen Kupplung 1, wie die Verbindung zum Motor, beispielsweise durch eine Zahnradanordnung, nicht näher erläutert wurden, da diese Teile für die Erläuterungen der Prinzipien vorliegender Erfindung nicht erforderlich sind.

### Bezugszeichenliste

- 1: Motorrad-Kupplung
- 2, 3: Innen- bzw. Außenlamellen
- 4: Ausrückeinrichtung
- 5: Druckkörper
- 6: Kupplungsfederanordnung
- 7: Korb
- 8: Nabe
- 9: Servoeinrichtung
- 10, 11: Membranen
- 12: Gehäuse
- 13: Außenteil
- 14: Mittelteil
- 15: Innenteil
- 16, 17: Unterdruckkammern
- 18: Unterdruckanschluss
- 19, 20: Atmosphärenkammer
- 21: Zwischenwand
- 22: Membranabdichtung
- 23, 24: Distanzscheiben
- 25: Kupplungshebel
- 26: Ansaugtrakt
- 27: Motor
- 28, 29: Dichtbereiche
- 30, 31: Wandabschnitte
- 32: Unterdruckleitung
- 33: Unterdruckbegrenzungseinrichtung
- 34: Anschlussleitung
- 35: Schaltstelle
- 36: Membrankolben
- 37: Verbindungseinrichtung
- 38: Feder
- 39: Festanschlag
- 40: Druckmittelzylinder

## Patentansprüche

1. Motorrad-Kupplung (1) für eine Antriebsverbindung zwischen einem Motor (27) und einem Schaltgetriebe eines Motorrades
- mit einem manuell betätigbaren Kupplungshebel (25),
- mit ineinandergreifenden Innen- und Außenlamellen (2 bzw. 3),
- mit einer mittels des Kupplungshebels (25) bedienbaren Ausrückeinrichtung (4) für einen Druckkörper (5), der durch wenigstens eine Kupplungsfederanordnung (6) zur Druckbeaufschlagung der Innen- und Außenlamellen (2 bzw. 3) federbelastet ist, und
- mit einer Servoeinrichtung (9) zur Reduktion der Betätigungskraft des Kupplungshebels (25), die mit dem Ansaugtrakt (26) des Motors (27) in Wirkverbindung steht und die unter Ausnutzung des Ansaugunterdruckes im Ansaugtrakt (26) eine der Richtung der Federkraft der Kupplungsfederanordnung (6) entgegengerichtete Servokraft aufbaut,
**gekennzeichnet**
- **durch** eine Unterdruckbegrenzungseinrichtung (33), die zwischen dem Ansaugtrakt (26) und einem Unterdruckanschluss (18) der Servoeinrichtung (9) angeordnet ist, und
- die eine zwischen dem Ansaugtrakt (26) und dem Unterdruckanschluss (18) angeordnete Schaltstelle (35) aufweist, die in Abhängigkeit vom Unterdruck im Ansaugtrakt (26) durch eine Betätigungseinrichtung (36, 37, 38, 39) öffen- und schließbar ist.

2. Kupplung nach Anspruch 1, **dadurch gekennzeichnet, dass** die Servoeinrichtung (9) eine Anordnung von zumindestens zwei Membranen (10, 11) aufweist.

3. Kupplung nach Anspruch 2, **dadurch gekennzeichnet, dass** die Membranen (10, 11) in Reihe geschaltet sind.

4. Kupplung nach Anspruch 3, **dadurch gekennzeichnet, dass** die Membranen (10, 11) in einem Gehäuse (12) integriert sind, wobei mindestens ein Atmosphärenraum (19, 20) und ein Unterdruckraum (16, 17) direkt aneinander liegen und nur durch eine verschiebbare Dichtung entkoppelt sind.

5. Kupplung nach Anspruch 3, **dadurch gekennzeichnet, dass** die Membranen (10, 11) in ein Gehäuse (12) gekoppelt integriert sind, wobei die Abdichtung von aneinander liegenden Atmosphären- und Unterdruckräumen (19, 20 bzw. 16, 17) durch eine weitere Membran erfolgt.

6. Kupplung nach Anspruch 2, **dadurch gekennzeichnet, dass** die Membranen (10, 11) in entgegengesetzter Wirkungsrichtung angeordnet sind und mit einer, vorzugsweise mechanischen oder hydraulischen Umlenkeinrichtung zur Gleichrichtung der Membrankräfte zusammenwirken.

7. Kupplung nach einem der Ansprüche 2 oder 3, **dadurch gekennzeichnet, dass** die Membranen (10, 11) in einem Gehäuse (12) eingespannt sind.

8. Kupplung nach Anspruch 7, **dadurch gekennzeichnet, dass** das Gehäuse (12) in der Kupplung (1) integriert ist.

9. Kupplung nach Anspruch 1, **dadurch gekennzeichnet, dass** die Unterdruckbegrenzungseinrichtung (33) in Abhängigkeit von einem oder mehreren Parametern elektrisch schaltbar ist.

10. Kupplung nach Anspruch 1, **dadurch gekennzeichnet, dass** die Betätigungseinrichtung der Unterdruckbegrenzungseinrichtung einen federbelasteten Membrankolben (36) aufweist, der gegenüber der Atmosphäre (A) gegen einen Festanschlag (39) vorgespannt ist.

11. Kupplung nach Anspruch 1, **dadurch gekennzeichnet, dass** zwischen der Schaltstelle (35) der Unterdruckbegrenzungseinrichtung (33) und dem Unterdruckanschluss (18) der Servoeinrichtung (9) ein zusätzlicher Unterdruckspeicher vorgesehen ist, der an die Servoeinrichtung (9) selektiv anschließbar ist.

## Claims

1. A motorcycle clutch (1) for a drive connection between an engine (27) and a transmission of a motorcycle, comprising:
- a manually operable clutch lever (25);
- engaging inner and outer disks (2 and 3, respectively);
- a disengaging mechanism (4) operable by the clutch lever (25) for a pressure body (5) which is spring-loaded by at least one clutch spring assembly (6) for pressurization of the inner and outer disks (2 and 3, respectively); and
- a servo mechanism (9) for reducing the operating force of the clutch lever (25), the servo mechanism being operatively coupled to the intake section (26) of the engine (27) and utilizing the negative intake pressure in the intake section (26) to build up a servo force acting against the direction of the spring load of the clutch spring assembly (6),
**characterized by**
- a negative pressure limitation device (33) which is positioned between the intake section (26) and a negative pressure port (18) of the servo mechanism (9), and
- which comprises a switching point (35) disposed between the intake section (26) and the negative pressure port (18), which can be opened and closed by an actuator (36, 37, 38, 39) in accordance with the negative pressure in the intake section (26).

2. The clutch of claim 1, **characterized in that** the servo mechanism (9) comprises an assembly of at least two diaphragms (10, 11).

3. The clutch of claim 2, **characterized in that** the diaphragms (10, 11) are connected in series.

4. The clutch of claim 3, **characterized in that** the diaphragms (10, 11) are included in a housing (12), at least one atmosphere chamber (19, 20) and one negative pressure chamber (16, 17) being located directly adjacent to each other and being uncoupled only by a displaceable seal.

5. The clutch of claim 3, **characterized in that** the diaphragms (10, 11) are included in a housing (12) in a coupled manner, the sealing of adjacently located atmosphere chambers and negative pressure chambers (19, 20 and 16, 17, respectively) being provided by a further diaphragm.

6. The clutch of claim 2, **characterized in that** the diaphragms (10, 11) are arranged in opposite effective directions and cooperate with a preferably mechanical or hydraulic reversing device for directing the diaphragm forces in the same direction.

7. The clutch of claim 2 or 3, **characterized in that** the diaphragms (10, 11) are clamped in a housing (12).

8. The clutch of claim 7, **characterized in that** the housing (12) is included in the clutch (1).

9. The clutch of claim 1, **characterized in that** the negative pressure limitation device (33) is electrically switchable in accordance with one or more parameters.

10. The clutch of claim 1, **characterized in that** the actuator of the negative pressure limitation device has a spring-loaded diaphragm piston (36) biased against a positive stop (39) with respect to the atmosphere (A).

11. The clutch of claim 1, **characterized in that** an additional negative pressure storage is provided between the switching point (35) of the negative pressure limitation device (33) and the negative pressure port (18) of the servo mechanism (9), which is selectively connectable to the servo mechanism (9).

## Revendications

1. Embrayage de moto (1) pour une connexion d'entraînement entre un moteur (27) et une boîte de vitesses d'une moto, comportant
- un levier d'embrayage (25) apte à être actionné manuellement,
- des disques intérieurs et extérieurs (2 et 3, respectivement) qui s'engrènent,
- un dispositif de débrayage (4) utilisable au moyen du levier d'embrayage (25) pour un corps de pression (5) qui est sollicité par ressort par au moins un agencement de ressort d'embrayage (6) pour la sollicitation par pression des disques intérieurs et extérieurs (2 et 3, respectivement), et
- un servomécanisme (9) pour la réduction de la force d'actionnement du levier d'embrayage (25), qui est en liaison fonctionnelle avec la section d'aspiration (26) du moteur (27) et qui en utilisant la dépression d'aspiration dans la section d'aspiration (26) établit une force d'assistance opposée au sens de la force de ressort de l'agencement de ressort d'embrayage (6),
**caractérisé par**
- un dispositif de limitation de dépression (33) qui est agencé entre la section d'aspiration (26) et un raccordement de dépression (18) du servomécanisme (9), et
- qui présente un poste de commutation (35) agencé entre la section d'aspiration (26) et le raccordement de dépression (18), lequel peut être ouvert et fermé au moyen d'un dispositif d'actionnement (36, 37, 38, 39) en fonction de la dépression dans la section d'aspiration (26).

2. Embrayage selon la revendication 1, **caractérisé en ce que** le servomécanisme (9) présente un agencement d'au moins deux membranes (10, 11).

3. Embrayage selon la revendication 2, **caractérisé en ce que** les membranes (10, 11) sont couplées en série.

4. Embrayage selon la revendication 3, **caractérisé en ce que** les membranes (10, 11) sont intégrées dans un boîtier (12), au moins une chambre atmosphérique (19, 20) et une chambre de dépression (16, 17) étant directement contigües et étant découplées uniquement par un joint déplaçable.

5. Embrayage selon la revendication 3, **caractérisé en ce que** les membranes (10, 11) sont intégrées dans un boîtier (12) de manière couplée, l'étanchement de chambres atmosphériques et de dépression (19, 20 et 16, 17, respectivement) contigües étant réalisé par une autre membrane.

6. Embrayage selon la revendication 2, **caractérisé en ce que** les membranes (10, 11) sont agencées selon des directions d'action opposées et coopèrent avec un dispositif de renvoi de préférence mécanique ou hydraulique pour diriger les forces de membrane dans la même direction.

7. Embrayage selon l'une des revendications 2 ou 3, **caractérisé en ce que** les membranes (10, 11) sont enserrées dans un boîtier (12).

8. Embrayage selon la revendication 7, **caractérisé en ce que** le boîtier (12) est intégré dans l'embrayage (1).

9. Embrayage selon la revendication 1, **caractérisé en ce que** le dispositif de limitation de dépression (33) est électriquement commutable en fonction d'un ou de plusieurs paramètres.

10. Embrayage selon la revendication 1, **caractérisé en ce que** le dispositif d'actionnement du dispositif de limitation de dépression présente un piston de membrane (36) qui est sollicité par ressort et qui est précontraint contre un butée fixe (39) par rapport à l'atmosphère (A).

11. Embrayage selon la revendication 1, **caractérisé en ce qu'**un accumulateur de dépression additionnel qui peut être sélectivement raccordé au servomécanisme (9) est prévu entre le poste de commutation (35) du dispositif de limitation de dépression (33) et le raccordement de dépression (18) du servomécanisme (9).
